# EUROPEAN PATENT APPLICATION

(11) **EP 2 835 170 A1**
(43) Date of publication of application: **11.02.2015**
(21) Application number: 14180257.9
(22) Date of filing: 07.08.2014
(51) Int. Cl.: B01D 53/14

(54) **Acid gas absorbent, acid gas removal method, and acid gas removal device**

(30) Priority: 07.08.2013 JP 2013164112
(71) Applicant: Kabushiki Kaisha Toshiba, Tokyo 105-8001 (JP)
(72) Inventor: Murai, Shinji, Tokyo (JP); Kato, Yasuhiro, Tokyo (JP); Maezawa, Yukishige, Tokyo (JP); Muramatsu, Takehiko, Tokyo (JP); Muraoka, Daigo, Tokyo (JP); Saito, Satoshi, Tokyo (JP)
(74) Representative: Granleese, Rhian Jane

(57) **Abstract**

An acid gas absorbent according to an embodiment includes at least one kind of amino acid salt represented by the following general formula (1).

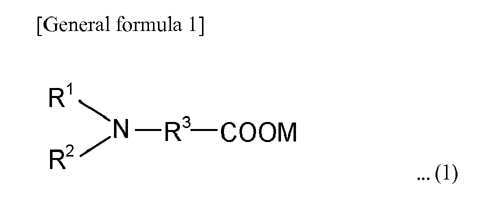

In the above-described formula (1), R¹ indicates a cyclic alkyl group having 3 to 8 carbon atoms, R² indicates a cyclic alkyl group having 3 to 8 carbon atoms, a chain alkyl group having 1 to 8 carbon atoms, or a hydrogen atom, R³ indicates a methylene group, an alkylene group having 2 to 4 carbon atoms, an alkylidene group having 2 to 4 carbon atoms, or a polymethylene group having 3 to 4 carbon atoms, and M indicates alkali metal.

## Description

### FIELD

Embodiments described herein relate generally to an acid gas absorbent, an acid gas removal method, and an acid gas removal device.

### BACKGROUND

In recent years, a greenhouse effect resulting from an increase in carbon dioxide (CO₂) concentration has been pointed out as a cause of global warming phenomena, and there is an urgent need to devise an international countermeasure to protect environment in a global scale. Industrial activities have a large responsibility as a generation source of CO₂, and there is a trend to suppress discharge of CO₂.

For suppression of the increase in concentration of acid gas, typically, CO₂, development of energy saving products, development of a separation and recovery technique of discharged acid gas, development of techniques to use the acid gas as a resource and to isolate and store the acid gas, switching to alternate energies such as natural energy and atomic energy that do not discharge the acid gas, and so on are performed.

As separation techniques of the acid gas that have been studied up to now, there are an absorption process, a suction process, a membrane separation process, a cryogenic process, and so on. Among them, the absorption process is suitable for processing a large amount of gas, and its application in a factory and a power station is considered.

Accordingly, in facilities such as a thermal power station using fossil fuels (coal, coal oil, natural gas, and so on), a method in which exhaust combustion gas generated when the fossil fuel is burned is brought into contact with a chemical absorbent, and thereby CO₂ in the exhaust combustion gas is removed and recovered, and further a method of storing the recovered CO₂ are performed throughout the world. Further, there is proposed to remove acid gas such as hydrogen sulfide (H₂S) in addition to CO₂ by using the chemical absorbent.

In general, alkanolamine typified by monoethanolamine (MEA) have been developed from the 1930s as the chemical absorbent used in the absorption process, and are still used at present. A method of using the alkanolamine is economical, and further it is easy to enlarge the removal device in size.

As existing and widely used alkanolamine, there are monoethanolamine, 2-amino-2-methylpropanolamine, methylaminoethanol, ethylaminoethanol, propylaminoethanol, diethanolamine, bis(2-hydroxy-1-methylethyl)amine, methyldiethanolamine, dimethylethanolamine, diethylethanolamine, triethanolamine, dimethylamino-1-methylethanol, and so on.

Ethanolamine being primary amine in particular among them has been widely used because its reaction speed is fast. However, this compound has corrosiveness to thus deteriorate easily, and further requires high energy for regeneration. On the other hand, methyldiethanolamine has low corrosiveness, and further has the advantage of energy required for regeneration also being low, but has the disadvantage of an absorption speed being low. Thus, development of a new absorbent in which these disadvantages are improved has been required.

In recent years, a study on particularly alkanolamine having structural steric hindrance, among amine based compound, has been vigorously tried as the absorbent of acid gas. Alkanolamine having the steric hindrance has extremely high selectivity of acid gas, and has the advantage of energy required for regeneration being small.

The reaction speed of the amine based compound having the steric hindrance depends on the degree of reaction hindrance determined by the steric structure thereof. With regard to the reaction speed of the amine based compound having the steric hindrance, for example, secondary amine such as methylethanolamine and diethanolamine is low in reaction speed, but tertiary amine such as methyldiethanolamine is high in reaction speed.

Further, there is also known a method in which as an amine based compound having a structure different from that of alkanolamine, cyclic amine is used as the absorbent.

However, when acid gas is absorbed by the acid gas absorbent using the above-described amine compound such as alkanolamine in an absorption tower, or when the absorbent is regenerated in a regeneration tower, the absorbent is easily diffused from the absorption tower or the regeneration tower, resulting in that absorption efficiency of the acid gas or recovery efficiency of the absorbent sometimes decreases. Therefore, an absorbent whose diffusion performance is suppressed is required even under the environment where it is used in an actual device.

On the other hand, there is known a method of using, as amine based compound other than alkanolamines, linear primary amino acid salt as the absorbent. The amino acid salt is excellent in solubility in water and further has diffusion performance to be suppressed, to thus be able to exhibit excellent absorption performance as the acid gas absorbent.

Further, there is also known a method of using secondary amino acid salt or tertiary amino acid salt as the acid gas absorbent.

However, when the linear amino acid salt is used as the absorbent, precipitates are sometimes generated when carbon dioxide is absorbed, and absorption efficiency of acid gas sometimes decreases with a decrease in concentration of the amino acid salt. Further, in this case, it is necessary to separately provide a process of recovering the precipitates to regenerate them as the amino acid salt, resulting in that the cost of the entire recovering process of acid gas is likely to increase. Further, there is a problem that when the primary amino acid salt is used as the absorbent, a large amount of energy is required when separating acid gas from the absorbent.

On the other hand, when the secondary amino acid salt or the tertiary amino acid salt is used as the absorbent, energy required for regeneration is small, but there is a problem that heat of reaction at an acid gas absorption time is not decreased sufficiently.

Thus, these techniques are still insufficient in terms of acid gas absorption capacities such as an acid gas absorption amount, an acid gas absorption speed, and heat of reaction at an acid gas absorption time, and further improvement of the gas absorption capacities is required. Further, there is required an absorbing liquid whose amine component is not easily diffused into the atmosphere when acid gas is absorbed and when an absorbent is regenerated.

### BRIEF DESCRIPTION OF THE DRAWINGS

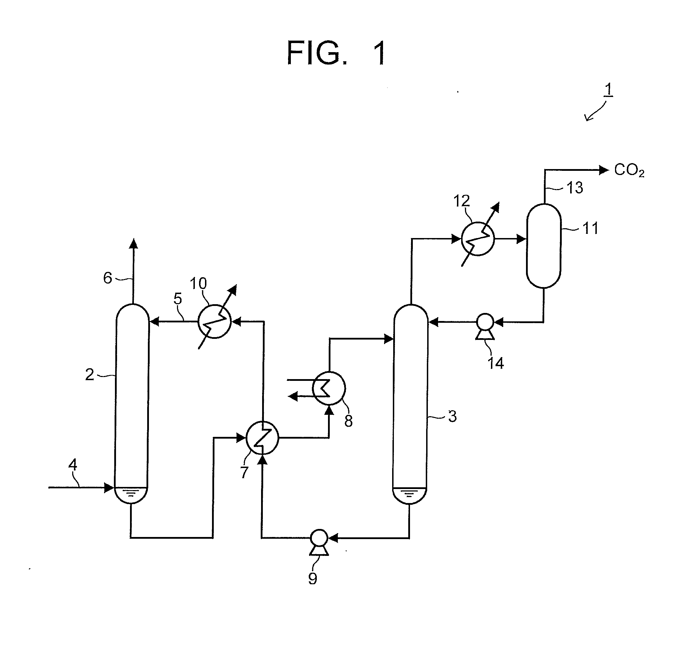

FIG. 1 is a schematic diagram of an acid gas removal device according to an embodiment.

### DETAILED DESCRIPTION

A problem to be solved by an embodiment is to provide an acid gas absorbent excellent in acid gas absorption capacities, whose absorption amount and absorption speed of acid gas such as carbon dioxide are high, which generates small heat of reaction when absorbing acid gas, and whose diffusion performance is suppressed, and an acid gas removal device and an acid gas removal method using the acid gas absorbent.

Hereinafter, an embodiment of the present invention will be explained in detail. An acid gas absorbent according to an embodiment includes at least one kind of amino acid salt represented by the following general formula (1). 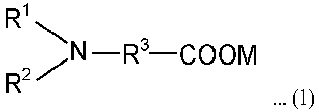 In the above-described formula (1), R¹ indicates a cyclic alkyl group having 3 to 8 carbon atoms, R² indicates a cyclic alkyl group having 3 to 8 carbon atoms, a chain alkyl group having 1 to 8 carbon atoms, or a hydrogen atom, R³ indicates a methylene group, an alkylene group having 2 to 4 carbon atoms, an alkylidene group having 2 to 4 carbon atoms, or a polymethylene group having 3 to 4 carbon atoms, and M indicates alkali metal.

Conventionally, it has been known that a steric hindrance held by an amine compound has a large effect on a product at a carbon dioxide absorption time, and plays an advantageous role on generation of bicarbonate ion exhibiting low heat of reaction. For example, it has been reported that N-isopropylaminoethanol having a branch structure exhibits low heat of reaction in an absorption reaction of carbon dioxide. As a result that based on such knowledge, the present inventor conducted studies to obtain a larger effect of the steric hindrance, it was found that it is possible to obtain further lower heat of reaction by using the compound represented by the above-described general formula (1) (for example, cyclopentyl sodium aminoacetate) than by using the conventional amine compound having the branch structure.

That is, the amino acid salt represented by the above-described general formula (1) has a structure in which the cyclic alkyl group (R¹) having 3 to 8 carbon atoms is directly coupled to a nitrogen atom of an amino group and a metal oxy carbonyl group (-COOM, M = alkali metal) is coupled to the nitrogen atom of the amino group via an divalent aliphatic hydrocarbon group (R³).

As above, the amino acid salt represented by the above-described general formula (1) has a structure with a large steric hindrance because the cyclic structure having not less than 3 nor more than 8 carbon atoms (R¹) is directly coupled to the nitrogen atom of the amino group. Therefore, it is conceivable that the bicarbonate ion is generated and the heat of reaction is decreased in a reaction between the amino acid salt represented by the above-described general formula (1) and carbon dioxide (CO₂). Further, the amino acid salt represented by the above-described general formula (1) has carboxylic salt, so that volatility is suppressed. Therefore, it is possible to decrease an amount of amine component to be discharged into the atmosphere in the course of processing exhaust gas when the acid gas absorbent in this embodiment is used.

The amino acid salt represented by the above-described general formula (1) (hereinafter, to be referred to as amino acid salt (1)) is dissolved in a solvent such as water, for example, and thereby, an acid gas absorbent having high acid gas absorption capacities can be obtained. Incidentally, in the following embodiment, the case when the acid gas is carbon dioxide will be explained as an example, but the acid gas absorbent according to the embodiment of the present invention is able to exhibit similar effects for other acid gases such as hydrogen sulfide.

In the above-described formula (1), R¹ represents a cyclic alkyl group having 3 to 8 carbon atoms, and is, for example, a cyclopropyl group, a cyclobutyl group, a cyclopentyl group, a cyclohexyl group, a cycloheptyl group, or a cyclooctyl group. The amino acid salt (1) has R¹ in a cyclic structure as above, to thus make it possible to decrease the heat of reaction of the amino acid salt (1) and the acid gas, so that it is possible to improve reactivity of the acid gas absorbent and the carbon dioxide.

R¹ (in a cyclic structure) described above is preferably a cyclopropyl group, a cyclobutyl group, a cyclopentyl group, or a cyclohexyl group from the viewpoint of the solubility in a solvent such as water. Particularly, when R¹ is a cyclopentyl group or a cyclohexyl group, a large steric hindrance can be obtained as the entire amino acid salt (1) while the amino acid salt (1) maintains good solubility in a solvent such as water. As a result, the effect of decreasing the heat of reaction when the acid gas is absorbed is enhanced, and the acid gas absorbent in this embodiment can exhibit excellent acid gas absorption capacities.

Further, the volatility is suppressed by a molecular structure of the amino acid salt (1). Therefore, as for the acid gas absorbent in this embodiment, it is possible to decrease the amount of the amine component to be discharged into the atmosphere in the course of processing exhaust gas.

R² represents a cyclic alkyl group having 3 to 8 carbon atoms, a chain alkyl group having 1 to 8 carbon atoms, or a hydrogen atom. Note "chain alkyl group" includes linear alkyl group and branched alkyl group. R² is, for example, a cyclopropyl group, a cyclobutyl group, a cyclopentyl group, a cyclohexyl group, a cycloheptyl group, a cyclooctyl group, a hydrogen atom, or a methyl group, an ethyl group, a propyl group, an isopropyl group, an n-butyl group, a sec-butyl group, or an iso-butyl group. When R² is a cyclic alkyl group having 3 to 8 carbon atoms similarly to the case of R¹, the heat of reaction of the amino acid salt (1) and the acid gas can be decreased, so that it is possible to improve the reactivity of the acid gas absorbent and the carbon dioxide. Further, when R² is a chain alkyl group having over 8 carbon atoms, hydrophobicity of the amino acid salt (1) becomes high and the solubility in a solvent deteriorates, resulting in that the reactivity of the acid gas absorbent and the acid gas is likely to decrease. When R² is a hydrogen atom, the reactivity of the amino acid salt (1) and the acid gas is increased and an absorption amount of acid gas is increased, and thus it is preferable. When R² is a methyl group, the absorption amount of acid gas slightly decreases as compared to the case of R² being a hydrogen atom, but there is obtained an advantage that the heat of reaction of the amino acid salt (1) and the acid gas is decreased.

When R² is an alkyl group, part of hydrogen atoms of the alkyl group may also be substituted with a group containing atoms of Si, O, N, S, and the like. The group containing the atoms of Si, O, N, S, and the like is, for example, a silanol group, a hydroxyl group, an amino group, a mercapto group, or the like.

When, for example, R² is a group obtained by substituting part of hydrogen atoms of the chain alkyl group having 1 to 8 carbon atoms with a hydroxyl group, the solubility in water of the amino acid salt (1) is increased. This group obtained by substituting part of hydrogen atoms of the chain alkyl group with a hydroxyl group is, for example, a hydroxyethyl group, a 1,2-dimethyl-2-hydroxyethyl group, a 2-hydroxy-2,2-dimethylethyl group, a 2-hydroxypropyl group, a 3-hydroxypropyl group, a 3-hydroxy-2-methylpropyl group, a 1-hydroxyisopropyl group, a 2,3-dihydroxypropyl group, a 1,3-dihydroxyisopropyl group, a 3-hydroxy-2-methylpropyl group, a 2-hydroxybutyl group, a 3-hydroxybutyl group, a 4- hydroxybutyl group, a 2,3-dihydroxybutyl group, a 2,4-dihydroxybutyl group, a 3,4-dihydroxybutyl group, a 2,3,4-trihydroxybutyl group, or the like.

R³ is a group coupled to a nitrogen atom of an amino group and coupled to a metal oxy carbonyl group (-COOM, M = alkali metal), and is a methylene group, an alkylene group having 2 to 4 carbon atoms, an alkylidene group having 2 to 4 carbon atoms, or a polymethylene group having 3 to 4 carbon atoms.

R³ is, for example, a methylene group, an ethylene group, a propylene group, a 1,2-butylene group, a 1,3-butylene group, a 2,3-butylene group, an ethylidene group, a propylidene group, a butylidene group, a trimethylene group, or a tetramethylene group.

When R³ is an alkylene group, an alkylidene group, or a polymethylene group, R³ may also be one having a branched chain such as, for example, a 2-methylpropylidene group. However, the number of carbon atoms including a branched chain of R³ is set to be in the range not over 4.

When the number of carbon atoms of R³ is over 4, the hydrophobicity of the amino acid salt (1) increases and the solubility in a solvent deteriorates, resulting in that the reactivity with the acid gas is likely to decrease. When the nitrogen atom of amino group and the metal oxy carbonyl group (-COOM, M = alkali metal) are directly coupled without carbon atoms of R³ intervening therebetween, basicity of the entire amino acid salt (1) deteriorates, resulting in that the reactivity with the acid gas is likely to decrease. When R³ is a methylene group, good solubility in a solvent such as water can be obtained while excellent reactivity with the acid gas is maintained, so that it is preferable.

When R³ is a methylene group, an alkylene group, an alkylidene group, or a polymethylene group, part of hydrogen atoms of the group may also be substituted with a substituent such as, for example, a hydroxyl group or a mercapto group. In this case, this substituent is preferably coupled to, among carbon atoms constituting R³, the carbon atom other than the carbon atom coupled to the nitrogen atom of the amino group.

In the above-described formula (1), M represents alkali metal, and is preferably Na, Li, K, Rb, Cs, or Fr.

Examples of the amino acid salt (1) represented by the general formula (1) are, for example, sodium cyclopropyl aminoacetate, sodium cyclobutyl aminoacetate, sodium cyclopentyl aminoacetate, sodium cyclohexyl aminoacetate, sodium cycloheptyl aminoacetate, sodium cyclooctyl aminoacetate, sodium 2-(cyclopropylamino) propionate, sodium 2-(cyclobutylamino) propionate, sodium 2-(cyclopentylamino) propionate, sodium 2-(cyclohexylamino) propionate, sodium 2-(cycloheptylamino) propionate, sodium 2-(cyclooctylamino) propionate, sodium 3-(cyclopropylamino) propionate, sodium 3-(cyclobutylamino) propionate, sodium 3-(cyclopentylamino) propionate, sodium 3-(cyclohexylamino) propionate, sodium 3-(cycloheptylamino) propionate, sodium 3-(cyclooctylamino) propionate, 2-(cyclopropylamino)-3-hydroxypropionic acid sodium, 2-(cyclobutylamino)-3-hydroxypropionic acid sodium, 2-(cyclopentylamino)-3-hydroxypropionic acid sodium, 2-(cyclohexylamino)-3-hydroxypropionic acid sodium, 2-(cycloheptylamino)-3-hydroxypropionic acid sodium, 2-(cyclooctylamino)-3-hydroxypropionic acid sodium, and so on.

Further, examples of the amino acid salt (1) represented by the general formula (1) are, for example, 2-(cyclopropylamino)butanoic acid sodium, 2-(cyclobutylamino)butanoic acid sodium, 2-(cyclopentylamino)butanoic acid sodium, 2-(cyclohexylamino)butanoic acid sodium, 2-(cycloheptylamino)butanoic acid sodium, 2-(cyclooctylamino)butanoic acid sodium, 3-(cyclopropylamino)butanoic acid sodium, 3-(cyclobutylamino)butanoic acid sodium, 3-(cyclopentylamino)butanoic acid sodium, 3-(cyclohexylamino)butanoic acid sodium, 3-(cycloheptylamino)butanoic acid sodium, 3-(cyclooctylamino)butanoic acid sodium, 4-(cyclopropylamino)butanoic acid sodium, 4-(cyclobutylamino)butanoic acid sodium, 4-(cyclopentylamino)butanoic acid sodium, 4-(cyclohexylamino)butanoic acid sodium, 4-(cycloheptylamino)butanoic acid sodium, 4-(cyclooctylamino)butanoic acid sodium, 2-(cyclopentylamino)-3-sulfanyl propionic acid sodium, and so on.

Incidentally, one kind of compound selected from the above-described groups can be used as the amino acid salt (1). Further, one in which two or more kinds of compounds selected from the above-described groups are mixed can also be used as the amino acid salt (1).

The content of the amino acid salt (1) contained in the acid gas absorbent is preferably 15 to 50 mass%. In general, an absorption amount and a desorption amount of carbon dioxide per unit capacity are larger and an absorption speed and a desorption speed of carbon dioxide are faster as the concentration of amine component is higher, and thus, this is preferable in view of energy consumption, a size of a plant facility, and process efficiency. However, it becomes impossible for the water contained in the absorbing liquid to fully exhibit a function as an activator for the absorption of carbon dioxide when the concentration of the amine component in the absorbing liquid is too high. Further, defects such as an increase in viscosity of the absorbing liquid become not negligible when the concentration of the amine component in the absorbing liquid is too high. When the content of the amino acid salt (1) is 50 mass% or less, phenomena such as the increase in viscosity of the absorbing liquid and the deterioration of the function of water as the activator are not recognized. Further, by setting the content of the amino acid salt (1) to 15 mass% or more, it is possible to obtain sufficient absorption amount and absorption speed of carbon dioxide, and to obtain excellent process efficiency.

When the acid gas absorbent having the content of the amino acid salt (1) in the range of 15 to 50 mass% is used for recovery of carbon dioxide, not only the carbon dioxide absorption amount and the carbon dioxide absorption speed are high but also the carbon dioxide desorption amount and the carbon dioxide desorption speed are high. Therefore, it is advantageous in that the recovery of carbon dioxide can be performed efficiently. The content of the amino acid salt (1) is more preferably 20 to 50 mass%.

The amino acid salt (1) is preferably used while being mixed with a reaction accelerator composed of alkanolamine and/or heterocyclic amine compound represented by the following general formula (2) (hereinafter, to be referred to as heterocyclic amine compound (2)).

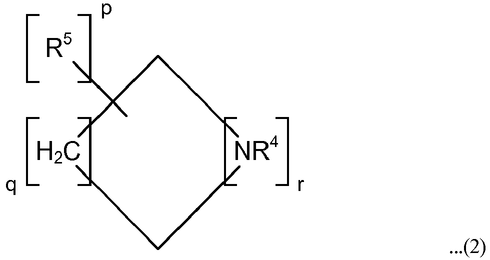

In the above-described formula (2), R⁴ indicates a hydrogen atom or an alkyl group having 1 to 4 carbon atoms, R⁵ indicates an alkyl group having 1 to 4 carbon atoms and coupled to a carbon atom in the heterocycle, "r" indicates an integer number of 1 to 3, "q" indicates an integer number of 1 to 4, "p" indicates an integer number of 0 to 12, and when "r" is 2 to 3, nitrogen atoms are not directly coupled with each other. When "q" is 2, "r" is an integer number of 1 or 2. Further, part of hydrogen atoms of the alkyl group having 1 to 4 carbon atoms, that is, of R⁴ and part of hydrogen atoms of the alkyl group having 1 to 4 carbon atoms, that is, of R⁵, may also be substituted with a hydroxyl group and an amino group respectively.

In this embodiment, it is possible to mix, for example, the amino acid salt (1) and the reaction accelerator composed of the alkanolamine and/or the heterocyclic amine compound (2). Then, as the acid gas absorbent, it is possible to use the one in which the mixture of the amino acid salt (1) and the alkanolamine and/or the heterocyclic amine compound (2) is made into, for example, a water solution. By using the amino acid salt (1) mixed with the alkanolamine and/or the heterocyclic amine compound (2), it is possible to further improve the carbon dioxide absorption amount per unit mol of the amino acid salt (1), the carbon dioxide absorption amount per unit volume of the acid gas absorbent, and the carbon dioxide absorption speed. Further, the use of the amino acid salt (1) mixed with the alkanolamine and/or the heterocyclic amine compound (2) lowers energy to separate the acid gas after the absorption of carbon dioxide (acid gas desorption energy), and also makes it possible to decrease energy required when the acid gas absorbent is regenerated.

As alkanolamine being the reaction accelerator, there can be cited, for example, monoethanolamine, 2-amino-2-methyl-1-propanol, 2-amino-2-methyl-1,3-dipropanolamine, methylaminoethanol, ethylaminoethanol, propylaminoethanol, diethanolamine, bis(2-hydroxy-1-methylethyl)amine, methyldiethanolamine, dimethylethanolamine, diethylethanolamine, triethanolamine, dimethylamino-1-methylethanol, 2-methylaminoethanol, n-butylaminoethanol, 2-(isopropylamino)ethanol, 3-ethylaminopropanol,and so on. Incidentally, the alkanolamine means a compound having an amino group and a hydroxyl group in a molecule.

The alkanolamines are preferably at least one kind selected from the group consisting of 2-(isopropylamino)ethanol, 2-(ethylamino)ethanol, and 2-amino-2-methyl-1-propanol, from the viewpoint of improving the reactivity of the amino acid salt (1) and the acid gas.

As the heterocyclic amine compound (2), there can be cited, for example, azetidine, 1-methylazetidine, 1-ethylazetidine, 2-methylazetidine, 2-azetidylmethanol, 2-(2-aminoethyl)azetidine, pyrrolidine, 1-methylpyrrolidine, 2-methylpyrrolidine, 2-butylpyrrolidine, 2-pyrrolidylmethanol, 2-(2-aminoethyl)pyrrolidine, piperidine, 1-methylpiperidine, 2-ethylpiperidine, 3-propylpiperidine, 4-ethylpiperidine, 2-piperidylmethanol, 3-piperidylethanol, 2-(2-aminoethyl)pyrrolidine, hexahydro-1H-azepine, hexamethylenetetramine, piperazine compound including piperazine and piperazine derivatives, and so on.

Among them, the piperazine compound is particularly desirable because the absorption amount of carbon dioxide absorbed by the acid gas absorbent and the absorption speed can be improved. The piperazine compound is a secondary amine compound. In general, a nitrogen atom of the secondary amino group is coupled to carbon dioxide to form a carbamate ion, and thereby, it contributes to the improvement of the absorption speed at an initial stage of the reaction. Further, the nitrogen atom of the secondary amino group has a role of converting the carbon dioxide coupled thereto into a bicarbonate ion (HCO₃⁻), and contributes to the improvement of the speed at a latter half stage of the reaction.

The piperazine compound is preferably at least one kind from among piperazine, 2-methylpiperazine, 2,5-dimethylpiperazine, 2,6-dimethylpiperazine, 1-methylpiperazine, 1-(2-hydroxyethyl)piperazine, and 1-(2-aminoethyl)piperazine. Further, the piperazine compound is more preferably at least one kind from among piperazine, 2-methylpiperazine, 2,5-dimethylpiperazine, 2,6-dimethylpiperazine.

The content of the reaction accelerator (the alkanolamine and/or the heterocyclic amine compound (2)) in the acid gas absorbent is preferably 1 to 15 mass%. There is a risk that the effect of improving the carbon dioxide absorption speed cannot be fully obtained when the content of the reaction accelerator is less than 1 mass%. When the content of the reaction accelerator exceeds 15 mass%, there is a risk that the reactivity conversely decreases because the viscosity of the absorbent becomes excessively high.

The acid gas absorbent may also contain an anticorrosive of a phosphoric acid based material or the like to prevent corrosion of plant equipment, a defoamer of a silicone based material or the like to prevent effervescence, an antioxidant to prevent deterioration of the acid gas absorbent, and so on, in addition to the amino acid salt and the reaction accelerator described above.

An acid gas removal method according to this embodiment includes bringing exhaust gas containing acid gas into contact with an acid gas absorbent made by dissolving the amino acid salt in the above-described embodiment in a solvent, and thereby absorbing and separating the acid gas from the exhaust gas to remove it.

An absorption and separation process of carbon dioxide includes: a carbon dioxide absorption process; and a carbon dioxide separation process. In the carbon dioxide absorption process, exhaust gas containing carbon dioxide is brought into contact with an acid gas absorbent to make the acid gas absorbent absorb the carbon dioxide. In the carbon dioxide separation process, the acid gas absorbent that has absorbed the carbon dioxide in the above-described carbon dioxide absorption process is heated, to thereby desorb the carbon dioxide from the acid gas absorbent and recover the carbon dioxide.

In the carbon dioxide absorption process, the method of bringing the gas containing the carbon dioxide into contact with a water solution containing the above-described acid gas absorbent is not particularly limited. In the carbon dioxide absorption process, for example, a method in which the gas containing the carbon dioxide is bubbled in the acid gas absorbent, and thereby the carbon dioxide is absorbed, a method in which the acid gas absorbent is atomized and sprayed in a flow of the gas containing the carbon dioxide (atomizing and spraying method), a method in which the gas containing the carbon dioxide is brought into countercurrent contact with the acid gas absorbent in an absorption tower containing a filler made of a porcelain or a filler made of a metal net, or the like is performed.

In the carbon dioxide absorption process, a temperature of the acid gas absorbent when the gas containing the carbon dioxide is absorbed in the water solution is normally within the range from room temperature to 60°C or lower. The temperature is preferably 50°C or lower and more preferably approximately 20°C to 45°C, where the carbon dioxide absorption process is performed. The absorption amount of the acid gas increases as the carbon dioxide absorption process is performed at a lower temperature, but a lower limit value of the process temperature is determined by a gas temperature, a heat recovery target and so on in the process. A pressure at the carbon dioxide absorption time is normally approximately the atmospheric pressure. It is also possible to pressurize up to higher pressure to enhance the absorption performance, but in order to suppress energy consumption required for compression, the carbon dioxide absorption is preferably performed under the atmospheric pressure.

In the carbon dioxide absorption process, the carbon dioxide absorption amount at the time when the carbon dioxide is absorbed by the acid gas absorbent containing 15 to 50 mass% of the amino acid salt according to the above-described embodiment (40°C) is approximately 0.3 to 0.85 mol per 1 mol of amino acid salt contained in the absorbent. Further, in the carbon dioxide absorption process, the carbon dioxide absorption speed of the acid gas absorbent containing 10 to 50 mass% of the amino acid salt according to the above-described embodiment after a few minutes since the start of the absorption of the carbon dioxide is approximately 0.002 to 0.008 mol/ L/min.

Here, a carbon dioxide saturation absorption amount is a value of an inorganic carbon amount in the acid gas absorbent measured by an infrared gas concentration measurement device. Further, the carbon dioxide absorption speed is a value measured by using an infrared carbon dioxide sensor at a time after a few minutes since the start of the absorption of the carbon dioxide.

In the carbon dioxide separation process, as a method of separating the carbon dioxide from the acid gas absorbent that has absorbed the carbon dioxide, and recovering pure or high-concentration carbon dioxide, there can be cited a method of desorbing the carbon dioxide by heating the acid gas absorbent and beating it in a pot as in distillation, a method of spreading a liquid interface in a plate tower, a spray tower, and a regeneration tower containing a filler made of a porcelain or a filler made of a metal net, followed by heating, and so on. The carbon dioxide is thereby released from carbamate anion and bicarbonate ion to be discharged.

In the carbon dioxide separation process, a temperature of the acid gas absorbent when the carbon dioxide is separated is normally 70°C or higher. The temperature of the acid gas absorbent when the carbon dioxide is separated is preferably 80°C or higher, and more preferably approximately 90 to 120°C. The desorption amount increases as the temperature is higher, but energy required for the heating of the absorbing liquid increases if the temperature is increased. Therefore, the temperature of the acid gas absorbent at the carbon dioxide separation time is determined by the gas temperature, the heat recovery target, and so on in the process. A pressure at the carbon dioxide desorption time is normally approximately the atmospheric pressure. It is also possible to decrease the pressure down to a lower pressure to enhance the desorption performance, but in order to suppress energy consumption required for the decrease in pressure, the pressure is preferably the atmospheric pressure.

The carbon dioxide desorption amount at the carbon dioxide desorption time (70°C) in the case of using the water solution containing 15 to 50 mass% of the amino acid salt according to the above-described embodiment is approximately 0.25 to 0.70 mol per 1 mol of amino acid salt contained in the absorbent.

The acid gas absorbent after the carbon dioxide is separated is cyclically used (recycled) in the carbon dioxide absorption process again. Further, the heat generated when the carbon dioxide is absorbed is generally heat exchanged by a heat exchanger for preheating the water solution to be injected into the regeneration tower during a recycle process of the water solution, and is cooled.

The purity of the carbon dioxide recovered as above is normally extremely high, which is approximately 95 to 99 vol%. This pure carbon dioxide or high-concentration carbon dioxide is used as chemicals, synthetic raw materials of polymer, a coolant for freezing foods, and so on. In addition, it is also possible to isolate and store the recovered carbon dioxide in an underground or the like that is currently technically developed.

The process of separating the carbon dioxide from the acid gas absorbent and regenerating the acid gas absorbent (carbon dioxide separation process), out of the above-described processes, consumes the largest amount of energy. In this carbon dioxide separation process, approximately 50 to 80% of the energy consumed in all the processes is consumed. Thus, by decreasing the consumption energy in the carbon dioxide separation process in which the acid gas absorbent is regenerated, the cost of the absorption and separation process of the carbon dioxide can be decreased. Therefore, it is possible to remove the acid gas from the exhaust gas advantageously from an economical viewpoint.

According to this embodiment, it is possible to decrease the energy required for the carbon dioxide desorption process (regeneration process) by using the acid gas absorbent in the above-described embodiment. Therefore, it is possible to perform the absorption and separation process of the carbon dioxide under an economically advantageous condition.

Further, the amino acid salt according to the above-described embodiment has extremely high corrosion-resistance to a metal material such as a carbon steel, compared to alkanolamine such as 2-aminoethanol that have been conventionally used as the acid gas absorbent. Thus, it is cost-advantageous to use the acid gas removal method using the acid gas absorbent in this embodiment because it is not necessary to use expensive high-grade corrosion-resistant steel in, for example, plant construction.

An acid gas removal device according to this embodiment being an acid gas removal device that removes, from gas containing acid gas, the acid gas includes: an absorption tower housing the acid gas absorbent according to the above-described embodiment therein and bringing the gas containing the acid gas into contact with the acid gas absorbent to remove the acid gas from the gas; and a regeneration tower housing the acid gas absorbent containing the acid gas absorbed in the absorption tower therein and removing the acid gas from the acid gas absorbent to regenerate the acid gas absorbent to be reused in the absorption tower.

FIG. 1 is a schematic diagram of an acid gas removal device according to an embodiment. This acid gas removal device 1 includes: an absorption tower 2; and a regeneration tower 3. In the acid gas removal device 1, the absorption tower 2 brings gas containing acid gas (hereinafter, to be referred to as exhaust gas) into contact with an acid gas absorbent to absorb and remove the acid gas from the exhaust gas. The regeneration tower 3 separates the acid gas from the acid gas absorbent that has absorbed the acid gas in the absorption tower 2 to regenerate the acid gas absorbent. Hereinafter, the case when the acid gas is carbon dioxide will be explained as an example.

As illustrated in FIG. 1, exhaust gas containing carbon dioxide, such as exhaust combustion gas to be discharged from a thermal power station, is introduced into a lower part of the absorption tower 2 through a gas supply port 4. An acid gas absorbent is supplied from an acid gas absorbent supply port 5 at an upper part of the absorption tower 2 to be housed in the absorption tower 2. The exhaust gas introduced into the absorption tower 2 is brought into contact with the acid gas absorbent housed in the absorption tower 2. The acid gas absorbent according to the above-described embodiment is used as the acid gas absorbent.

A pH value of the acid gas absorbent is preferably adjusted to at least 9 or more. An optimum condition of the pH value of the acid gas absorbent is preferably selected as necessary depending on a kind, concentration, a flow rate, or the like of harmful gas contained in the exhaust gas. Further, the acid gas absorbent may also contain other compounds such as a nitrogen-containing compound improving the absorption performance of carbon dioxide, an antioxidant, and a pH adjusting agent in arbitrary ratios, in addition to the above-described amine based compound and the solvent such as water.

As above, the exhaust gas is brought into contact with the acid gas absorbent in the absorption tower 2, and thereby the carbon dioxide in the exhaust gas is absorbed by the acid gas absorbent to be removed from the exhaust gas. The exhaust gas after the carbon dioxide is removed is discharged to the outside of the absorption tower 2 from a gas discharge port 6.

The acid gas absorbent that has absorbed the carbon dioxide is transferred to a heat exchanger 7 and a heater 8 sequentially from the absorption tower 2 to be heated, and thereafter, transferred to the regeneration tower 3. The acid gas absorbent transferred into the regeneration tower 3 is moved from an upper part to a lower part of the regeneration tower 3, and during the moving, the carbon dioxide in the acid gas absorbent is desorbed, and the acid gas absorbent is regenerated.

The acid gas absorbent regenerated in the regeneration tower 3 is transferred to the heat exchanger 7 and an absorbing liquid cooler 10 sequentially by a pump 9, and returned to the absorption tower 2 through the acid gas absorbent supply port 5.

On the other hand, the carbon dioxide separated from the acid gas absorbent is brought into contact with reflux water supplied from a reflux drum 11 in the upper part of the regeneration tower 3 to be discharged to the outside of the regeneration tower 3. The reflux water in which the carbon dioxide is dissolved is cooled in a reflux condenser 12, and thereafter, in the reflux drum 11, the reflux water is separated from a liquid component in which vapor with the carbon dioxide is condensed, and this liquid component is introduced into the carbon dioxide recovery process by a recovery carbon dioxide line 13. On the other hand, the reflux water from which the carbon dioxide is separated is transferred to the regeneration tower 3 by a reflux water pump 14.

According to the acid gas removal device 1 in this embodiment, it becomes possible to absorb and remove carbon dioxide highly efficiently by using the acid gas absorbent excellent in carbon dioxide absorption property and desorption property.

### [Examples]

Hereinafter, the present invention will be explained in more detail with reference to examples and a comparative example, but the present invention is not limited to these examples.

### (EXAMPLE 1)

A 50 ml water solution (hereinafter, to be referred to as an absorbing liquid) was prepared by dissolving sodium 2-(cyclopentylamino) acetate and piperazine in water so that the contents of them became 45 mass% and 5 mass% respectively to total mass of the absorbing liquid. This absorbing liquid was filled in a test tube and heated to 40°C, and then a mixed gas containing 10 vol% of carbon dioxide (CO₂)and 90 vol% of nitrogen (N₂) gas was aerated in the absorbing liquid at a flow rate of 500 mL/min. Then, absorption performance was evaluated by measuring the carbon dioxide (CO₂)concentration in the gas to be discharged from an exit of the test tube by using an infrared gas concentration measurement device (manufactured by SHIMADZU CORPORATION, product name "CGT-700"). A 1/8 inch Teflon (registered trademark) tube (inside diameter: 1.59 mm, outside diameter: 3.17 mm) was used for a gas introducing port through which the gas is introduced into the absorbing liquid in the test tube. Next, the absorbing liquid in which the mixed gas was absorbed at 40°C as described above was heated to 80°C, 100% nitrogen (N₂) gas was aerated at a flow rate of 500 mL/min, and the CO₂ concentration in the absorbing liquid was measured by using the infrared gas concentration measurement device to evaluate release performance. A carbon dioxide absorption speed of the absorbing liquid was set to the speed measured at a time after two minutes since the start of the absorption of carbon dioxide. A carbon dioxide absorption amount of the absorbing liquid at 40°C was 0.64 mol per 1 mol of the amino acid salt in the absorbing liquid. A carbon dioxide (CO₂) absorption amount of the absorbing liquid at 80°C was 0.14 mol per 1 mol of the amino acid salt. In a process of absorbing the carbon dioxide (CO₂) at 40°C and desorbing the carbon dioxide (CO₂) at 80°C, 0.50 mol of CO₂ was recovered per 1 mol of the amino acid salt. A CO₂ absorption speed was 0.0070 mol/L/min.

Heat of reaction was measured as follows. A differential reaction calorimeter "DRC" (product name, manufactured by SETARAM) composed of a glass reaction vessel and a reference vessel with the same shape installed in a thermostatic oven was used to measure the heat of reaction of the carbon dioxide absorption by the absorbing liquid. The reaction vessel and the reference vessel were each filled with 150 mL of the absorbing liquid, and constant-temperature water at 40°C was circulated in jacket portions of the vessels. In this state, carbon dioxide gas with a 100% concentration was blown to the absorbing liquid in the reaction vessel at 200 ml/min, and a temperature increase of the liquid was continuously recorded by a thermograph until the carbon dioxide absorption was finished. Then, the heat of reaction was calculated by using an overall heat transfer coefficient between the reaction vessel and the jacket water that was measured in advance. The heat of reaction of the carbon dioxide absorption was 68 kJ/mol.

Diffusion performance of the absorbing liquid was measured as follows. The absorbing liquid of 100 ml was supplied into a glass tube with a cooling tube attached thereto, and the weight of the glass tube in which the absorbing liquid was housed was measured. Next, the glass tube in which the absorbing liquid was housed was installed in the thermostatic oven at 80°C and was heated for 10 hours, and then the weight of the glass tube in which the absorbing liquid was housed was measured. Incidentally, during this period, nitrogen gas was aerated in the absorbing liquid at a rate of 100 ml/min. Then, a weight decrease ratio was calculated from the weight of the glass tube before heating and the weight of the glass tube after heating. The weight decrease ratio was 0.3%.

### (EXAMPLE 2)

An absorbing liquid (water solution) was prepared in the same manner as in Example 1 except that sodium 2-(cyclopentylamino) propionate was used in place of sodium 2-(cyclopentylamino) acetate. Then, a carbon dioxide absorption amount, a carbon dioxide absorption speed, heat of reaction, and a weight decrease ratio (diffusion performance) were measured under the same conditions by using the same devices as those of Example 1. The carbon dioxide absorption amount at 40°C was 0.62 mol and the carbon dioxide absorption amount at 80°C was 0.14 mol, per 1 mol of the amino acid salt. in the absorbing liquid. Then, 0.48 mol of carbon dioxide was recovered per 1 mol of the amino acid salt. in the absorbing liquid. The CO₂ absorption speed was 0.0068 mol/L/min. The heat of reaction of the carbon dioxide absorption was 69 kJ/mol. The weight decrease ratio was 0.2%.

### (EXAMPLE 3)

A 50 ml absorbing liquid was prepared by dissolving sodium 2-(cyclopentylamino) acetate, 2-amino-2-methyl-1-propanol and piperazine in water, so that the contents of them became 40 mass%, 5 mass% and 5 mass% respectively to total mass of the absorbing liquid. Then, a carbon dioxide absorption amount, a carbon dioxide absorption speed, heat of reaction, and a weight decrease ratio (diffusion performance) were measured under the same conditions by using the same devices as those of Example 1. The carbon dioxide absorption amount at 40°C was 0.84 mol and the carbon dioxide absorption amount at 80°C was 0.25 mol, per 1 mol of the amino acid salt in the absorbing liquid. Then, 0.59 mol of carbon dioxide was recovered per 1 mol of the amino acid salt in the absorbing liquid. The CO₂ absorption speed was 0.0061 mol/L/min. The heat of reaction of the carbon dioxide absorption was 71 kJ/mol. The weight decrease ratio was 0.4%.

### (COMPARATIVE EXAMPLE 1)

A 50 ml water solution (hereinafter, to be referred to as an absorbing liquid) was prepared by dissolving propyldiethanolamine and piperazine in water so that the contents of them became 50 mass% and 5 mass% respectively to total mass of the absorbing liquid. Then, a carbon dioxide absorption amount, a carbon dioxide absorption speed, heat of reaction, and a weight decrease ratio (diffusion performance) were measured under the same conditions by using the same devices as those of Example 1. The carbon dioxide absorption amount at 40°C was 0.21 mol and the carbon dioxide absorption amount at 80°C was 0.09 mol, per 1 mol of propyldiethanolamine in the absorbing liquid. Then, 0.12 mol of carbon dioxide was recovered per 1 mol of propyldiethanolamine in the absorbing liquid. The CO₂ absorption speed was 0.0035 mol/L/min. The heat of reaction of the carbon dioxide absorption was 63 kJ/mol. The weight decrease ratio was 5%.

The measurement results of the carbon dioxide absorption amount at 40°C, the carbon dioxide absorption amount at 80°C, the carbon dioxide recovery amount, the carbon dioxide absorption speed, the heat of reaction, and the weight decrease ratio (diffusion performance) in EXAMPLES 1 to 3 and COMPARATIVE EXAMPLE 1 are shown in Table 1, together with the contents of the amino acid salt or the amine compound and the reaction accelerator in the absorbing liquid. Note that in Table 1, the carbon dioxide absorption amount and the carbon dioxide recovery amount are the absorption amount and the recovery amount per 1 mol of the amino acid salt for EXAMPLES or the amine compound (propyldiethanolamine) for COMPARATIVE EXAMPLE contained in the absorbing liquid, which are expressed in the number of moles. Further, in EXAMPLES 1 to 3 and COMPARATIVE EXAMPLE 1, the heat of reaction indicates the heat of reaction per 1 mol of the carbon dioxide (CO₂) contained in the absorbing liquid.

**[Table 1]**

| | Content of the component to total mass of the absorbing liquid [mass%] | | | Kind of group or atom in the Amino Acid Salt(1) | | | CO₂ Absorption Amount (40°C) [mol] | CO₂ Absorption Amount (80°C) [mol] | CO₂ Recovery Amount [mol] | CO₂ Absorption Speed [mol/L/min] | Heat of Reaction [kJ/mol] | Weight Decrease Ratio (Diffusion Performance) [%] |
|---|---|---|---|---|---|---|---|---|---|---|---|---|
| | Amino Acid Salt(1) or Amine Compound | Reaction Accelerator | | | | | | | | | | |
| | | Alkanol-amine | Hetrocyclic Amine Compound(2) | R¹ | R² | R³ | | | | | | |
| E1 | 45 | - | 5 | cyclopentyl group | H | methylene group | 0.64 | 0.14 | 0.50 | 0.0070 | 68 | 0.3 |
| E2 | 45 | - | 5 | cyclopentyl group | H | ethylene group | 0.62 | 0.14 | 0.48 | 0.0068 | 69 | 0.2 |
| E3 | 40 | 5 | 5 | cyclopentyl group | H | methylene group | 0.84 | 0.25 | 0.59 | 0.0061 | 71 | 0.4 |
| CE1 | 50 | - | 5 | - | - | - | 0.21 | 0.09 | 0.12 | 0.0035 | 63 | 5.0 |

| | | | | | | | | | | | | |
|---|---|---|---|---|---|---|---|---|---|---|---|---|
| E1 to E3 = EXAMPLE 1 to EXAMPLE 3 CE1 = COMPARATIVE EXAMPLE 1 | | | | | | | | | | | | |

As is clear from Table 1, in the absorbing liquids of EXAMPLES 1 to 3 each using the amino acid salt having a cyclic alkyl group, the carbon dioxide recovery amount and the carbon dioxide absorption speed were both high, and the absorption performance of carbon dioxide was excellent. On the other hand, in COMPARATIVE EXAMPLE 1 using propyldiethanolamine (PDEA) having only chain alkyl group as the amine compound, the carbon dioxide recovery amount was low, which was 0.12 mol, and further the carbon dioxide absorption speed was also small. Further, in the absorbing liquid of COMPARATIVE EXAMPLE 1, the weight decrease ratio was confirmed to be 5%, but in the absorbing liquids of EXAMPLES 1 to 3, it was confirmed that the weight decrease ratio is low, which is 0.2 to 0.4%, and the diffusion performance is suppressed. Further, in the absorbing liquids of EXAMPLES 1 to 3, the heat of reaction per 1 mol of carbon dioxide was substantially the same as that of the absorbing liquid of COMPARATIVE EXAMPLE 1.

According to the acid gas absorbent, the acid gas removal method, and the acid gas removal device of at least one of the embodiments described above, it is possible to increase the absorption amount and the absorption speed of acid gas such as carbon dioxide, and to decrease the heat of reaction at the acid gas absorption time.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An acid gas absorbent comprising at least one kind of amino acid salt represented by the following general formula (1): 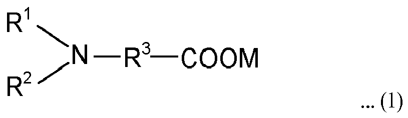 where R¹ indicates a cyclic alkyl group having 3 to 8 carbon atoms; R² indicates a cyclic alkyl group having 3 to 8 carbon atoms, a chain alkyl group having 1 to 8 carbon atoms, or a hydrogen atom; R³ indicates a methylene group, an alkylene group having 2 to 4 carbon atoms, an alkylidene group having 2 to 4 carbon atoms, or a polymethylene group having 3 to 4 carbon atoms; and M indicates alkali metal.

2. The acid gas absorbent according to claim 1,
wherein, in the amino acid salt represented by the general formula (1), R³ is a methylene group.

3. The acid gas absorbent according to claim 1 or 2,
wherein, in the amino acid salt represented by the general formula (1), R² is a methyl group or a hydrogen atom.

4. The acid gas absorbent according to any one of claims 1 to 3,
wherein, in the amino acid salt represented by the general formula (1), R¹ is a cyclopentyl group or a cyclohexyl group.

5. The acid gas absorbent according to any one of claims 1 to 4,
wherein the content of the amino acid salt represented by the general formula (1) is 15 to 50 mass%.

6. The acid gas absorbent according to any one of claims 1 to 5, further comprising:
a reaction accelerator composed of alkanolamine and/or heterocyclic amine compound represented by the following general formula (2), 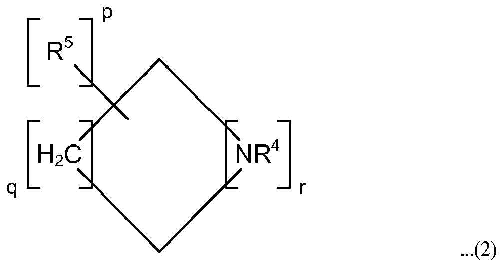 where R⁴ indicates a hydrogen atom or an alkyl group having 1 to 4 carbon atoms, R⁵ indicates an alkyl group having 1 to 4 carbon atoms and coupled to a carbon atom in the heterocycle, "r" indicates an integer number of 1 to 3, "q" indicates an integer number of 1 to 4, "p" indicates an integer number of 0 to 12, and when "r" is 2 to 3, nitrogen atoms are not directly coupled with each other;
wherein the content of the reaction accelerator is 1 to 15 mass%.

7. The acid gas absorbent according to claim 6,
wherein the alkanolamine is at least one kind selected from the group consisting of 2-(isopropylamino)ethanol, 2-(ethylamino)ethanol, and 2-amino-2-methyl-1-propanol.

8. The acid gas absorbent according to claim 6 or 7,
wherein the heterocyclic amine compound includes at least one kind of piperazine compound.

9. The acid gas absorbent according to claim 8,
wherein the piperazine compound is at least one kind selected from the group consisting of piperazine, 2-methylpiperazine, 2,5-dimethylpiperazine, and 2,6-dimethylpiperazine.

10. An acid gas removal method comprising:
bringing gas containing acid gas into contact with the acid gas absorbent according to any one of claims 1 to 9 to thereby remove the acid gas from the gas containing the acid gas.

11. An acid gas removal device for removing, from gas containing acid gas, the acid gas, the acid gas removal device comprising:
an absorption tower housing the acid gas absorbent according to any one of claims 1 to 9 therein and bringing the gas containing the acid gas into contact with the acid gas absorbent to remove the acid gas from the gas; and
a regeneration tower housing the acid gas absorbent that has absorbed the acid gas in the absorption tower therein, removing the acid gas from the acid gas absorbent, and regenerating the acid gas absorbent in order for the acid gas absorbent to be reused in the absorption tower.
